# EUROPEAN PATENT APPLICATION

(11) **EP 3 345 731 A1**
(43) Date of publication of application: **11.07.2018**
(21) Application number: 17174427.9
(22) Date of filing: 05.06.2017
(51) Int. Cl.: B26D 1/44, B26D 3/28, B26D 5/10, B26D 7/18, A47J 17/02, A01F 11/00, A01F 11/06, A01F 12/44

(54) **ROTARY CUTTER FOR REMOVING CORNS FROM MAIZE COBS AND FOOD PROCESSOR THEREWITH**

(30) Priority: 05.01.2017 CN 201720011272 U
(71) Applicant: Wong, Yan Kwong, Kowloon Bay Kowloon, Hong Kong (CN)
(72) Inventor: Wong, Yan Kwong, Kowloon Bay Kowloon, Hong Kong (CN)
(74) Representative: Cabinet Chaillot

(57) **Abstract**

The present invention provides a cutter (1) for corn threshing. The cutter (1) is adapted to be mounted on a rotary food processor with a driving device and comprises a cylinder (2) with an open end; a cavity (21) disposed in the cylinder (2) to accommodate threshed corn cobs; a cutting member (3) disposed at the open end of the cavity (21); and a locking portion (4) disposed at the other end of the cylinder and connected to the driving device of the rotary food processor in a detachable manner. The present invention further discloses a rotary food processor with this cutter (1). The cutter (1) for corn threshing and the rotary food processor both have the advantages of small volume, simple operation and high practicability.

## Description

### Technical Field of the Invention

The present invention relates to the technical field of articles for daily use, and more particularly, to a cutter for corn threshing and a rotary food processor with this cutter.

### Background of the Invention

Thresher is a tool widely applied in people's daily life. For example, corn thresher is a device for separating kernels from cobs of corn. Corn threshers are widely used to thresh corn in agricultural production. Compared with traditional manual threshing, threshing corn by a corn thresher has the advantages of good threshing effect, high working efficiency and low labor cost.

However, in daily life, if corn is threshed at home, basically it is threshed by hand. Or finished corn kernels are directly bought from the vendors in the market. Finished corn kernels are much expensive than unthreshed corn. Besides, even the finished corn kernels sold by vendors in the market are threshed almost all by hand. As a result, the threshing effect is not ideal, the threshing rate is low and the damage rate of threshed corn kernels is high.

Corn threshers are mostly used in agricultural production. The existing corn threshers universally have the problems of large volume, high price and serious noise pollution, so this type of corn threshers cannot meet the use requirements of daily life of ordinary families or vendors in the market and cannot adapt to the use of daily life.

### Summary of the Invention

In order to solve the foregoing problem, the main object of the present invention is to provide a cutter for corn threshing with a small volume, simple operation and high practicability.

Another object of the present invention is to provide a rotary food processor which is equipped with a corn threshing cutter and characterized by small volume, simple operation and high applicability.

In order to realize the main object of the present invention, the cutter for corn threshing provided by the present invention, which is mounted on a rotary food processor with a driving device, comprises:
a cylinder having an open end;
a cavity disposed in the cylinder to accommodate threshed corn cob;
a cutting member disposed at the middle of an open end of the cavity for threshing corns;
a locking portion disposed at the other end of the cylinder and connected to the driving device of the rotary food processor in a detachable manner;
a circular guard board disposed at the open end of the cylinder, wherein the cutting edge of the cutting member that is serrate passes through a central hole of the circular guard board and protrudes out of the open end;
at least two retaining pieces disposed on the outer edge of the circular guard board, and distributed along the circumference in a uniform manner and extended in a direction same as the cutting member, wherein the horizontal plane where the top end of each retaining piece is located is higher than the horizontal plane where the cutting edge of the cutting member is located; and
at least one scraper disposed between the retaining pieces of the circular guard board and the cutting member, and extended in a radial direction of the cylinder.

Preferably, the cutting edge of the cutting member is serrate and can have a stronger cutting ability, effectively raise the cutting ability and threshing rate of the cutter to particulate materials and effectively lower the damage rate of threshed particulate materials.

Thus it can be seen, the cavity at the middle of the cylinder for accommodating threshed corn cobs is provided, when corn is threshed, it is aligned with the cavity so that the cutting member cuts and quickly captures the particulate materials on it, allowing simple and convenient operation of the cutter. Besides, a locking portion is provided with the cylinder so that the cutter can be connected to an external driving device, thereby realizing corn threshing operation.

Preferably, the cutting member is a blade assembly comprising at least two arc blades. The blade assembly is distributed along the circumference in a uniform manner. The space jointly limited and constituted by the blade assembly allows free passage of threshed corn cobs in various diameters.

Thus it can be seen, the circular guard board disposed on the cylinder and the retaining pieces disposed on the circular guard board can effectively prevent contact of the hand holding corn with the blade, avoid injury of the user and improve use safety of the cutter when the cutter cuts corn kernels.

Preferably, two scrapers is provided, which are evenly distributed on the surface of the circular guard board and along the circumference. The scrapers are intended to disperse and pull back the cut corn kernels, especially the corn kernels in a crowd, under the drive of the rotating cylinder, thereby falling out of the cylinder along the retaining pieces.

In order to realize another object of the present invention, the present invention provides a rotary food processor for corn threshing, comprising:
a support base;
a food processing portion connected to the support base in a detachable manner and supported and held by the support base;
a cutter mounted in the food processing portion and connected to a first end of the food processing portion;
a driving device connected to the first end of the food processing portion for driving the cutter; in which the cutter comprises:
   a cylinder having an open end;
   a cavity disposed in the cylinder to accommodate threshed corn cob;
   a cutting member disposed at the middle of an open end of the cavity for threshing corns;
   a locking portion disposed at the other end of the cylinder and connected to the driving device of the rotary food processor in a detachable manner;
   a circular guard board disposed at the open end of the cylinder, wherein the cutting edge of the cutting member that is serrate passes through a central hole of the circular guard board and protrudes out of the open end;
   at least two retaining pieces disposed on the outer edge of the circular guard board, and distributed along the circumference in a uniform manner and extended in a direction same as the cutting member, wherein the horizontal plane where the top end of each retaining piece is located is higher than the horizontal plane where the cutting edge of the cutting member is located; and
   at least one scraper disposed between the retaining pieces of the circular guard board and the cutting member, and extended in a radial direction of the cylinder.

Thus it can be seen, the food processing portion provides a mounting space for the cutter and plays a supporting role and the cavity at the middle of the cylinder is intended to accommodate threshed corn cobs. When corn is threshed, it is aligned with the cavity so that the cutting member cuts and quickly captures the particulate materials on it. The cutter has the advantage of simple and convenient operation.

In one embodiment, the cutting member is a blade assembly comprising at least two arc blades. The blade assembly is distributed along the circumference in a uniform manner. The space jointly limited and constituted by the blade assembly allows free passage of threshed corn cobs in various diameters.

The detachable connection between the food processing portion and the support base facilitates the cleaning and maintenance of the corn thresher.

Preferably, the second end of the food processing portion is an open end and connected to an annular end cover. One side of the annular end cover is provided with an annular embossment, which is fit with the port of the second end of the food processing portion, thereby keeping the annular end cover between the port of the second end and the retaining pieces of the circular guard board.

Thus it can be seen, providing an annular end cover and connecting it to the second end of the food processing portion enables the fixation and limitation of the cutter mounted inside the food processing portion and prevents the cutter from breaking away from the food processing portion at the second end of the food processing portion.

Still further, a keyhole is disposed on a side wall of the annular end cover, and a lock catch fit with the keyhole is disposed on the external wall of the port of the second end of the food processing portion and can stably hold the annular end cover at the port of the second end of the food processing portion.

Still further, the second end of the food processing portion mounted on the support base tilts down at a specific angle so that the center of the second end is lower than the center of the first end and the cut corn kernels can smoothly fall out of the accommodation cavity of the food processing portion.

### Brief Description of the Drawings

Below the present invention will be described in detail by referring to the accompanying drawings and embodiments, in which:
FIG. 1 is a first schematic view of a cutter for corn threshing of the present invention;
FIG. 2 is a second schematic view of a cutter for corn threshing of the present invention;
FIG. 3 is a third schematic view of a cutter for corn threshing of the present invention;
FIG. 4 is a sectional view of a cutter for corn threshing mounted on a rotary food processor in the first operation condition according to one embodiment of the present invention;
FIG. 5 is an exploded view of the rotary food processor and the cutter for corn threshing as shown in FIG. 4;
FIG. 6 is a schematic view of the rotary food processor with the cutter for corn threshing as shown in FIG. 4 in which some components are omitted;
FIG. 7 is an enlarged view of section A in FIG. 4;
FIG. 8 is a sectional view of a cutter for corn threshing mounted on a rotary food processor in the second operation condition; and
FIG. 9 is a sectional view of a cutter for corn threshing mounted on a rotary food processor in the third operation condition.

### Detailed Description of the Invention

The cutter for corn threshing and the structure of a rotary food processor with the cutter in accordance with the present invention are elaborated below through the following embodiments.

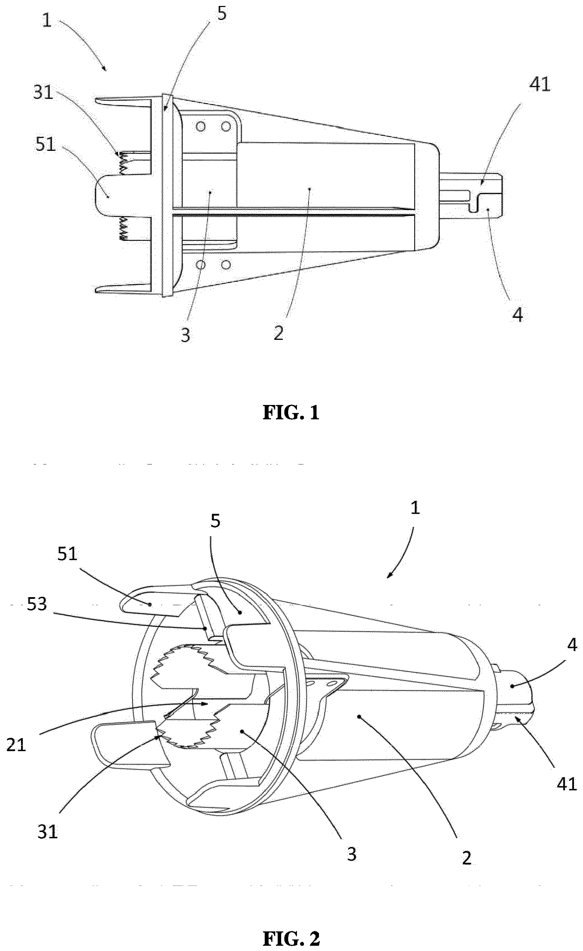

FIG. 1 and FIG. 2 show a cutter 1 for corn threshing, comprising a cylinder 2. A cavity 21 is disposed at the middle of the cylinder 2 and a cutting member 3 is disposed at an open end of the cavity 21. In this embodiment, the cutting member 3 comprises a blade assembly comprising two arc blades arranged face to face, each of which has a serrate cutting edge, and the space jointly limited and constituted by the blade assembly allows free passage of threshed corn cobs in various diameters. Obviously, the blade assembly is not limited to have two blades, which may have one or three or more blades. When it has three or more blades, all the blades are distributed along the circumference of the cavity 21 in a uniform manner so that the cutter 1 has more uniform cutting force during threshing of corn, which may improve the quality of corn threshing and the threshing rate of corn, and reduce the damage rate of corn kernels.

Such design of the cutting edge 31 of the cutting member 3 and the cavity 21 makes that the cutting edge disposed at the open end of the cavity 21 is located between corn cob and corn kernels, thereby rendering free entry of the part of corn cobs of which corn kernels are cut into the cavity 21 through the space limited by the blade. Further, the cavity 21 may accommodate at least a half length of a corn cob. Of course, the cavity 21 may also be designed to accommodate a full length of a corn cob. The cutting edge 31 of the cutting member 3 is designed to be serrate so that it has a greater cutting ability, which may effectively improve the cutting ability and threshing rate of the cutter 1 to corn kernels and reduce the damage rate of corn kernels.

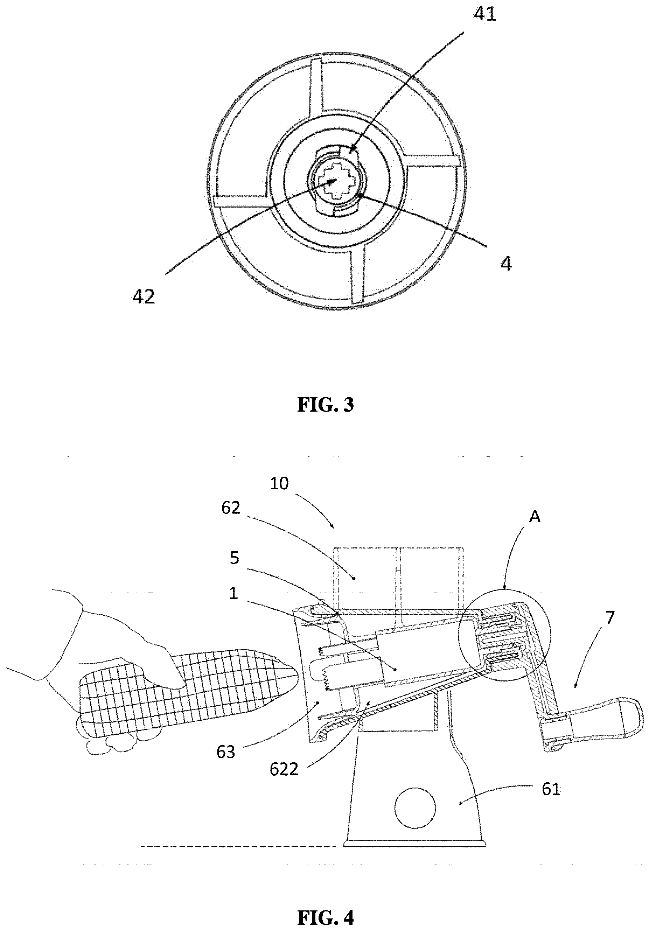

FIG. 3 shows a schematic view of the other end of the cylinder 2 farther from the cutting member 3. The cylinder 2 is provided with a locking portion 4 at the end farther from the cutting member 3. The locking portion 4 is connected to a driving device 7. A locking groove 41 is disposed on the circumferential wall of the locking portion 4. Specifically, there are two locking grooves 41, which are distributed along the circumference of the locking portion in a uniform manner and intended to enhance the tightness of the connection between the cutter 1 and the driving device 7, which can prevent the cutter 1 from disengaged from the driving device 7 when the driving device 7 drives the cutter 1 to rotate, and avoid safety accidents. In addition, a connecting groove 42 is disposed at the middle of the locking portion 41 for connecting the driving end of the driving device 7 so that the driving end of the driving device 7 drives the cutter 1 to rotate.

The cutter 1 further comprises a circular guard board 5 located on the open end of the cylinder 2. The cutting edge of the cutting member 3 passes through the central hole of the circular guard board 5 and protrudes out of the open end of the cylinder 2. The outer edge of the circular guard board 5 is provided with at least two retaining pieces 51 distributed along the circumference in a uniform manner and extended in a direction same as the blade. In this embodiment, four retaining pieces 51 are provided, which are evenly distributed along the outer edge of the circular guard board 5 in a circumferential direction. Further the horizontal plane where the top end of each retaining piece 51 is located is higher than the horizontal plane where the cutting edge of the cutting member 3 is located.

At least one scraper 53 extended substantially in a radial direction is disposed between the retaining pieces 51 of the circular guard board and the cutting member 3. In this embodiment, two scrapers 53 are evenly distributed on the surface of the circular guard board 5 and along the circumference, and each of them neighbors on the retaining piece 51. The scrapers 53 are intended to disperse and pull back the cut corn kernels, especially the corn kernels in a crowd, under the drive of the rotating cylinder 2, thereby falling out of the cylinder 2 along the retaining pieces 51.

The retaining pieces 51 enables to prevent the hand holding corn from contacting the cutting member 3 during corn cutting of the cutters and avoid injury of the hand by the cutting edge 31 during cutting operation of the cutter 1, thereby preventing safety accidents and enhancing use safety of the cutter. In addition, between the retaining pieces 51 and the cutting member 3, there is a space that can accommodate corn kernels. When the cut corn kernels or corn kernels in a crowd meet with the scraper 53, they eventually are dispersed and pulled back, and fall along the retaining pieces 51 to a vessel or tabletop for storage of corn kernels.

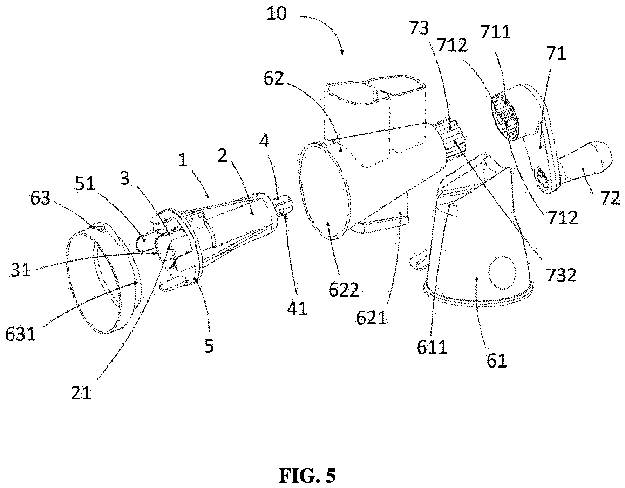

The rotary food processor 10 shown in FIG. 4-FIG. 6 comprises a support base 61, a food processing portion 62 for providing an installation space for the cutter 1 and supporting the cutter 1 and a driving device 7.

A boss 621 is disposed at the bottom of the food processing portion 62, an accommodation cavity 622 is disposed at the middle of the food processing portion 62. The cutter 1 is mounted in the accommodation cavity 622 and connected to the first end of the food processing portion 62 around its own axis in a rotatable manner, and the driving device 7 is connected to the first end of the food processing portion 62 in a detachable manner. While providing installation for the cutter 1, the food processing portion 62 makes for connection between the driving device 7 and the cutter 1.

A groove 611 is disposed on the support base 61, which is designed to cooperate with the boss 621 at the bottom of the food processing portion 62. Further, the support base 61 and the food processing portion 62 realize detachable connection through the groove 611 and the boss 621, which helps users to clean and maintain the support base 6 easily. Besides, the support base 61 can fix and support the food processing portion 62, thereby providing an operable space for the driving device 7 and being able to prevent shaking of the food processing portion 62 during work of the cutter 1.

The second end of the food processing portion 62 mounted on the support base tilts down at a specific angle so that the center of the second end is lower than the center of the first end and the cut corn kernels can smoothly fall out of the accommodation cavity.

An annular end cover 63 is connected to the second end (open end) of the food processing portion 62. One side of the annular end cover 63 is provided with an annular embossment 631, which is fit with a port of the accommodation cavity 622 of the food processing portion 62, thereby keeping the annular end cover 63 between the port of the accommodation cavity 622 and the retaining pieces 51. The annular end cover 63 is intended to fix and limit the cutter 1 mounted in the food processing portion 62, which can prevent the cutter 1 from breaking away from the second end of the food processing portion 63, improve use safety of the cutter 1 and cover the cutting member 3 and the retaining pieces 51.

Preferably, a keyhole 632 is disposed on a side wall of the annular end cover 63, and a lock catch 623 fitting with the keyhole 632 is disposed on the external wall of the port of the accommodation cavity 622 of the food processing portion 62, by which the annular end cover 63 can be stably held at the port of the accommodation cavity 622.

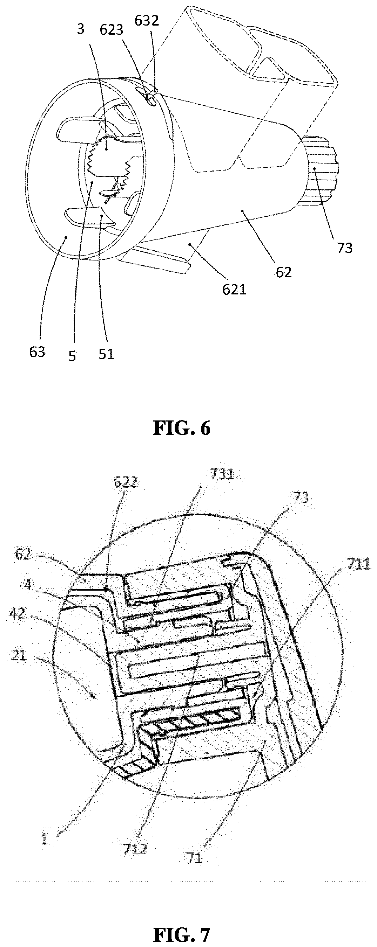

As shown in FIG. 7, as well as FIG. 4 and FIG. 5, the driving device 7 comprises a rocker arm 71, a handle 72 and a first connecting rack 73. The handle 72 is connected to the first end of the rocker arm 71 around its own axis in a rotatable manner. The second end of the rocker arm 71 is provided with a blind hole 711. A connecting member 712 fitting with the connecting groove 42 of the locking portion 4 of the cutter 1 is disposed at the bottom of the blind hole 711 facing toward the blind hole, which is outwardly extended along the blind hole 711. The blind hole 711 is connected to the second end of the food processing portion 62 in a detachable manner. The connecting member 712 is connected to the connecting groove 42 of the locking portion 4 of the cutter 1. The driving device 7 drives the cutter 1 to rotate through a connecting member 712. Preferably, the connecting piece 712 is a connecting key.

The first connecting rack 73 is mounted in the blind hole 711 in a fixed manner, which is provided with a first lock catch 731. When the rocker arm 71 is connected to the second end of the food processing portion 62, the first lock catch 731 of the first connecting rack 73 is connected to the locking groove 41 of the locking portion 4 of the cutter 1 in a detachable manner, and the driving device 7 is fixed to the cutter 1 via the first lock catch 731 to prevent mutual disengagement between the cutter 1 and the driving device 7 during operation.

In addition, as shown in FIG. 2, a plurality of grooves 732 are disposed on the wall of the outer circumference of the first connecting rack 73 uniformly, and the blind hole 711 of the rocker arm 71 is provided with a plurality of connecting poles 713 fitting with the groove 732 on the wall of the inner circumference uniformly. The first connecting rack 73 is connected to the rocker arm 71 for cooperation through the groove 732 and the connecting pole 713.

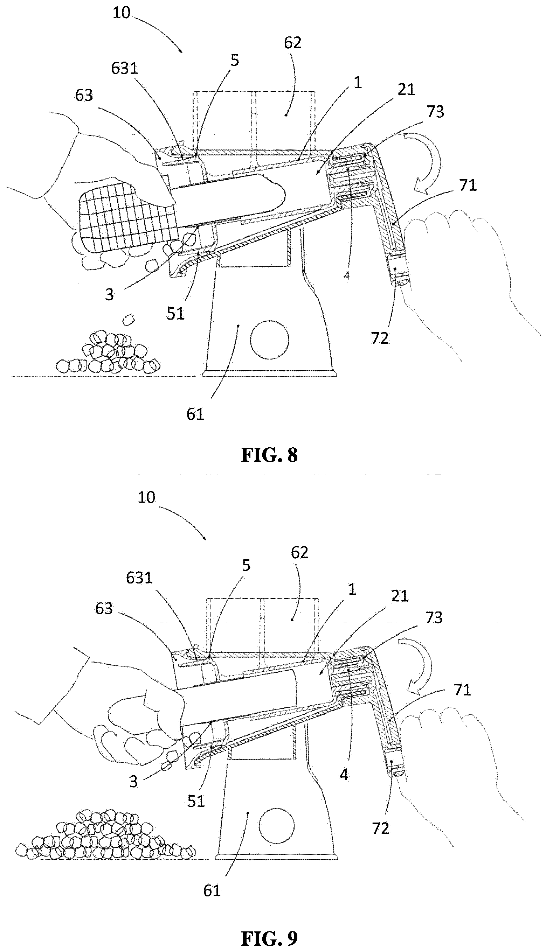

As shown in FIG. 8 and FIG. 9, as well as FIG. 4, when corn needs to be threshed, the operator holds one end of the corn, aligns the other end of the corn with the cavity 21 of the cylinder 2, and allows that the corn kernels on the corn contact to the cutting edge 31 of the cutting member 3.

Next, the handle 72 drives the rocker arm 71 to rotate so that the second end of the rocker arm 71 drives the cutter 1 connected to the rocker arm 71 to rotate around its own axis, and pushes the corn towards the bottom of the cavity 21, thereby realizing cutting of corn kernels by the cutting member 3. As the cutter 1 performs corn threshing under the condition of its rotation, the threshing effect is better, which may improve the corn threshing rate effectively and reduce the damage rate of corn kernels. Besides, the rotating cutter 1 can help to thresh corn in a more energy saving manner.

Furthermore, when a threshed corn cob is longer than a half of the full length, the threshing operation is stopped, and the corn is retreated from the cutter 1 and turned around, so that the unthreshed rest half of the corn can be threshed according to the foregoing steps. When the corn is fully threshed, the corn cob can be easily retreated from the cavity 21.

Of course, when the threshed corn cob is longer than a half of the full length, the corn may be further threshed without turning it around.

In light of the above, the cutter for corn threshing and the rotary food processor with this cutter of the present invention have the advantages of small volume, simple operation and high practicability. Moreover, this thresher is safe, reliable and easy to clean.

It needs to be noted that the above is preferred embodiments of the present invention and are not intended to limit the present invention. For those skilled in the art, the present invention may have various changes and modifications. All the modifications, identical replacements and improvements made without departing from the spirit and principle of the present invention shall be within the protection scope of the present invention.

## Claims

1. A cutter for corn threshing which is mounted on a rotary food processor with a driving device, wherein the cutter comprises:
a cylinder having an open end;
a cavity disposed in the cylinder to accommodate threshed corn cob;
a cutting member disposed at the middle of an open end of the cavity for threshing corns;
a locking portion disposed at the other end of the cylinder and connected to the driving device of the rotary food processor in a detachable manner;
a circular guard board disposed at the open end of the cylinder, wherein the cutting edge of the cutting member that is serrate passes through a central hole of the circular guard board and protrudes out of the open end;
at least two retaining pieces disposed on the outer edge of the circular guard board, and distributed along the circumference in a uniform manner and extended in a direction same as the cutting member, wherein the horizontal plane where the top end of each retaining piece is located is higher than the horizontal plane where the cutting edge of the cutting member is located; and
at least one scraper disposed between the retaining pieces of the circular guard board and the cutting member, and extended in a radial direction of the cylinder.

2. The cutter according to claim 1, wherein the cutting member is a blade assembly comprising at least two arc blades which are distributed along the circumference in a uniform manner; and wherein the space jointly limited and constituted by the blades allow free passage of threshed corn cobs in various diameters.

3. A rotary food processor for corn threshing, comprising:
a support base;
a food processing portion connected to the support base in a detachable manner and supported and held by the support base;
a cutter mounted in the food processing portion and connected to a first end of the food processing portion;
a driving device connected to the first end of the food processing portion for driving the cutter;
wherein the cutter comprises:
a cylinder having an open end;
a cavity disposed in the cylinder to accommodate threshed corn cob;
a cutting member disposed at the middle of an open end of the cavity;
a locking portion disposed at the other end of the cylinder and connected to the driving device of the rotary food processor in a detachable manner;
a circular guard board disposed at the open end of the cylinder, wherein the cutting edge of the cutting member that is serrate passes through a central hole of the circular guard board and protrudes out of the open end;
at least two retaining pieces disposed on the outer edge of the circular guard board, and distributed along the circumference in a uniform manner and extended in a direction same as the cutting member, wherein the horizontal plane where the top end of each retaining piece is located is higher than the horizontal plane where the cutting edge of the cutting member is located; and
at least one scraper disposed between the retaining pieces of the circular guard board and the cutting member, and extended in a radial direction of the cylinder.

4. The rotary food processor according to claim 3, wherein the cutting member is a blade assembly comprising at least two arc blades which are distributed along the circumference in a uniform manner; and wherein the space jointly limited and constituted by the blades allow free passage of threshed corn cobs in various diameters.

5. The rotary food processor according to claim 3, wherein the food processing portion has an open second end connected to an annular end cover; and an annular embossment is provided with a side of the annular end cover and fitted with the second end of the food processing portion so that the annular end cover is kept between a port of the second end and the retaining pieces of the circular guard board.
